# EUROPEAN PATENT APPLICATION

(11) **EP 1 903 061 A1**
(43) Date of publication of application: **26.03.2008**
(21) Application number: 06121181.9
(22) Date of filing: 25.09.2006
(51) Int. Cl.: C08F 4/659, C08F 10/06, C07F 17/00

(54) **Preparation of diphenyl-bridged substituted cyclopentadienyl-fluorenyl ligands**

(71) Applicant: TOTAL PETROCHEMICALS RESEARCH FELUY, 7181 Seneffe (Feluy) (BE)
(72) Inventor: Razavi, Abbas, B-7000, Mons (BE); Kirillov, Evgueni, 23 rue de Chatillon F-35000, Rennes (FR); Carpentier, Jean-françois, F-35690, Acigne (FR)

(57) **Abstract**

The present invention discloses efficient methods for preparing substituted cyclopentadienyl-fluorenyl catalyst components having a diphenyl bridge.

## Description

The present invention relates to new methods for the preparation of metallocene catalyst components based on diphenyl-bridged substituted cyclopentadienyl-fluorenyl ligands.

It is possible to develop catalyst systems that are able to produce different types of polymer such as isotactic, syndiotactic or atactic. It is, however, desirable that the selected catalyst produces predominantly an isotactic or syndiotactic polymer with very little atactic polymer. C2- or C1-symmetric metallocene catalysts are known to produce isotactic polyolefins. For example, C2 symmetric bis-indenyl type zirconocenes can produce high molecular weight, high melting temperature isotactic polypropylene. The preparation of this metallocene catalyst is, however, costly and time-consuming. Most importantly, the final catalyst consists of a mixture of racemic and meso isomers in an often unfavourable ratio. The meso stereoisomer has to be separated to avoid the formation of atactic polypropylene during the polymerisation reaction.

EP-A-0426644 relates to syndiotactic copolymers of olefins such as propylene obtainable using as a catalyst component isopropyl (fluorenyl)(cyclopentadienyl) zirconium dichloride. Syndiotacticity, as measured by the amount of syndiotactic pentads rrrr was found to be 73-80%.

EP 747406 relates to the polymerisation of an olefin monomer to form a syndiotactic/isotactic block polyolefin, particularly a block polypropylene. A component of the polymerisation catalyst was a 3-trimethylsilyl cyclopentadienyl-9-fluorenyl zirconium or hafnium dichloride having an isopropylidene or diphenylmethylidene bridge.

EP-A-577581 discloses the production of syndiotactic polypropylenes using metallocene catalysts having fluorenyl groups substituted in positions 2 and 7 and an unsubstituted cyclopentadienyl ring.

EP-A-0419677 describes the production of syndiotactic polypropylene with an object to produce resin compositions having high stiffness when moulded. Metallocene catalysts such as isopropyl(cyclopentadienyl-1-fluorenyl) zirconium dichloride were used in the production of polypropylene. However, the molecular weight, melting point and syndiotacticity of these products were relatively low.

Many bridged cyclopentadienyl-fluorenyl components have been described in literature but few have been prepared and most of the complexes formed are quite unstable.

There is a need to develop new catalyst systems capable of providing polymers with improved properties and efficient methods for preparing them.

It is an aim of the present invention to provide a method for efficiently preparing diphenyl-bridged cyclopentadienyl-fluorenyl catalyst components.

It is also an aim of the present invention to use these catalyst components for the preparation of polymers having high molecular weight.

It is another aim of the present invention to use these catalyst components to prepare polymers having a high melting temperature.

It is a further aim of the present invention to use these catalyst components to prepare impact copolymers having improved impact properties.

Accordingly, the present invention provides a process for preparing a catalyst component of general formula

R'(R^{b}₂-Flu) (R^{c}R^{d}C₅H₂) MQ₂

werein R' is a diaryl bridge, preferably a diphenyl bridge, and wherein R^{b}, R^{c} and R^{d} are each independently selected from H or alkyl having from 1 to 12 carbon atoms or silyl groups substituted or unsubstituted
wherein M is a metal Group 4 of the Periodic Table and
wherein Q is halogen or alkyl having from 1 to 12 carbon atoms, and said process comprising:
a) reaction by nucleophilic addition, in a solvent, of the group (R^{a}₂CR^{c}R^{d}fulvene),
   wherein each R^{a} is independently selected from halogenated aromatic group, preferably halogenated phenyl group, with the group [R^{b}₂-Flu]-[M']⁺ wherein M' is alkali metal such as Li, Na, K;
b) hydrolysis and separation of the resulting ligand;
c) elimination of the halogen substituents on the aromatic R^{a} groups by reaction with a reducing system in a solvent and protic source, capable of reducing CX bond but not the C==C bond of the cyclopentadienyl group in the presence of a palladium-based catalyst such as for example 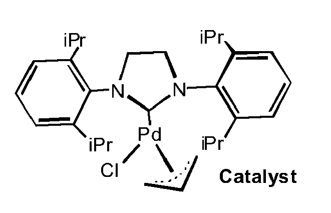 and wherein the amount of reducing system is of at least 2 equivalents, preferably 4 equivalents per equivalent of ligand ;
d) deprotonation of the ligand of step b) with R"M" to prepare a di-anion ligand, wherein R" is an alkyl having from 1 to 6 carbon atoms and M" is Li, Na or K;
e) salt metathesis reaction in a solvent of the di-anion ligand of step d) with MQ₄ wherein M is a metal group 4 of the Periodic Table and Q is halogen or alkyl or benzyl;
f) isolation of the diaryl-bridged catalyst component by crystallisation.

The halogenated aromatic group of step a) is preferably a halogenated phenyl and more preferably a phenyl carrying a chlorine at position 4.

A preferred example of reducing agent is KO^{t}Bu/NaBPh₄.

The solvent and protic source are for example THF/HOiPr.

The catalyst reacts easily with the unactivated CX bond and favours the reaction. In addition, it allows the reaction to take place at a temperature of from room temperature to 100 °C, preferably at a temperature of about 60 °C.

Throughout this description, the positions are labelled as represented below.

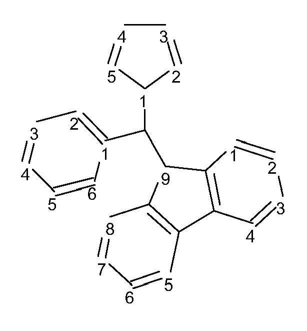

Preferably, both R^{b} are the same and are alkyl groups having from 1 to 6 carbon atoms, more preferably they both are tert-butyl. They are preferably located at positions 1 and 8 or 2 and 7 or 3 and 6. More preferably they are located at positions 3 and 6 and they are tert-butyl.

Preferably R^{c} is H or methyl or ethyl.

Preferably R^{d} is an alkyl group having from 3 to 6 carbon atoms, more preferably, it is tert-butyl.

Preferably M is Zr, Hf or Ti, more preferably, it is Zr.

Preferably Q is a halogen or methyl, more preferably it is chlorine.

Preferably, M" is Li.

The solvent of steps a) and e) may be the same or different and are a hydrocarbon, preferably selected from pentane, toluene, and/or ether such as tetrahydrofuran (THF) or diethyl ether (Et₂O). Preferably they are the same and are Et₂O. Without wishing to be bound by a theory, it is believed Et₂O stabilises a transition state of the nucleophilic addition reaction including bulky constrained reagents. The reaction of step a) is carried out at a temperature of from 0 to 90 °C, preferably at a temperature of about 80 °C, for a period of time of from 1 to 10 days, preferably of about 72 hours.

Preferably the reaction of step c) is carried out at a temperature of from room temperature to 80 °C, preferably of about 60 °C and for a period of time of from 1 to 4 hours, preferably of about 3 hours, depending upon catalyst loading. Preferably the amount of catalyst is of 0.1 to 5 mole% with respect to X.

Any activating agent having an ionising action known in the art may be used for activating the metallocene component for polymerisation. For example, it can be selected from aluminium-containing or boron-containing compounds. The aluminium-containing compounds comprise aluminoxanes, alkyl aluminiums and/or Lewis acids.

The aluminoxanes are preferred and may comprise oligomeric linear and/or cyclic alkyl aluminoxanes represented by the formula: 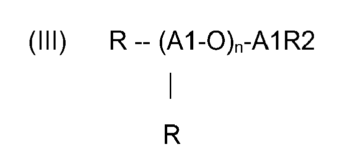 for oligomeric, linear aluminoxanes and 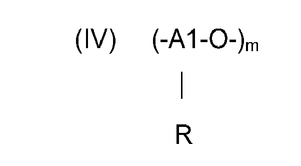 for oligomeric, cyclic aluminoxane,
wherein n is 1-40, preferably 10-20, m is 3-40, preferably 3-20 and R is a C₁-C₈ alkyl group and preferably methyl.

Suitable boron-containing activating agents can be used when Q is alkyl or benzyl. They comprise triphenylcarbenium boronates such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The catalyst system can also be supported. The support if present can be a porous mineral oxide, advantageously selected from silica, alumina and mixtures thereof. Preferably, it is silica.

Alternatively, a fluorinated activating support can be used.

The catalyst system of the present invention can be used in the polymerisation of ethylene and alpha-olefins. It is preferably used to prepare highly isotactic propylene homopolymers having a high weight average molecular weight of at least 500 kDa, preferably at least 700 kDa, a high melting temperature of more than 150 °C, preferably of more than 160 °C.

It can also be used to prepare ethylene-propylene rubber (EPR) having an ethylene content of from 8 to 15 wt%, a high weight average molecular weight of at least 500 kDa, preferably at least 700 kDa, and a melt flow index MFI of from 2 to 10 dg/min. The melt flow index is measured following the method of standard test ASTM D 1238 under a load of 2.16 kg and at a temperature of 230 °C. The EPR obtained in the present invention is characterised by excellent impact properties. It can be used in all applications that require elastomers with excellent thermoplastic properties.

### List of Figures.

Figure 1 represents the reaction scheme for the preparation of ligand Ph₂C(3,6-*^{t}*Bu₂Flu)(3-*^{t}*Bu-5-Me-Cp)

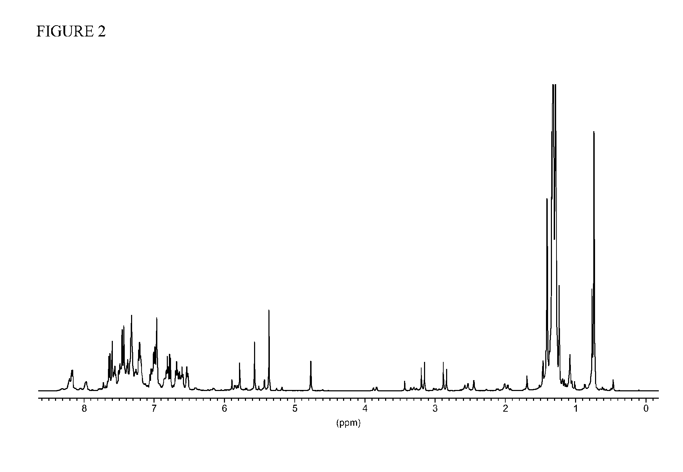

Figure 2 represents the ¹H NMR spectrum of the diphenyl ligand.
Figure 3 represents the X-ray crystallography of Ph₂C(3,6-*^{t}*Bu₂Flu)(3-*^{t}*Bu-5-Me-Cp) (2) ·CH₂Cl₂.

### Examples.

All experiments were performed under purified argon atmosphere using standard Schlenk techniques or in a glovebox. Solvents were distilled from Na/benzophenone (tetrahydrofuran (THF), diethyl ether (Et₂O)) and Na/K alloy (toluene, pentane) under nitrogen, they were thoroughly degassed and stored under nitrogen. Deuterated solvents (benzene-*d*₆, toluene-*d*₈, THF-*d*₈; >99.5% D, Deutero GmbH) were vacuum-transferred from Na/K alloy into storage tubes. Chloroform-d₃ and CD₂Cl₂ were kept over calcium hydride and vacuum-transferred before use. The precursor 3,6-di-*tert-*butyl-9-{(4-*tert*-butyl-2-methylcyclopenta-1,4-dien-1-yl)[bis(4-chlorophenyl)]methyl}-9H-fluorene (1) was prepared according to the procedure disclosed in prior art.

### One-pot synthesis of palladium allyl complex (SiPr)Pd(C₃H₅)CI.

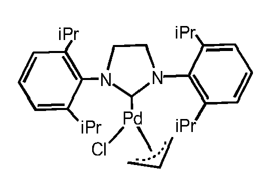

The synthesis was carried out following the method developed by Viciu et al. (Viciu, M.S.; Germaneau, R.F.; Navarro-Fernandez, O.; Stevens, E.D.; Nolan, S.P. in Organometallics 2002, 21, 5470-5472).

In glovebox 0.70 g (1.64 mmol) of N,N'-bis(2,6-diisopropylphenyl)-4,5-dihydroimidazol)-2-ylidene) chloride 0.194 g (1.73 mmol) of KO*^{t}*Bu and 0.3 g (0.82 mmol) of allyl palladium chloride dimer [(C₃H₅)PdCI]₂ were charged in a Schlenk tube in which 40 mL of dry THF were vacuum transferred. The reaction was allowed to warm up to room temperature and kept under stirring for a period of time of over 12 h. The reaction mixture was passed through a thin layer of silica to remove the "palladium black" formed. The product was precipitated by adding 100 mL of hexane, washed and then dried under vacuum to give 0.82 g of (SIPr)Pd(C₃H₅)Cl with a yield of 87%. The ¹H and ¹³C NMR spectra recorded were identical with those published.

### Synthesis of ligang Ph₂C(3,6-^{t}Bu₂Flu)(3-^{t}Bu-5-Me-Cp).

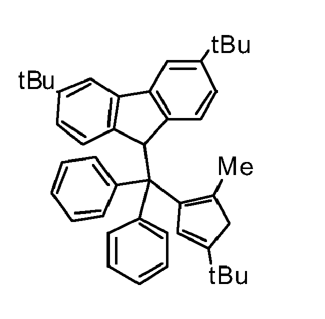

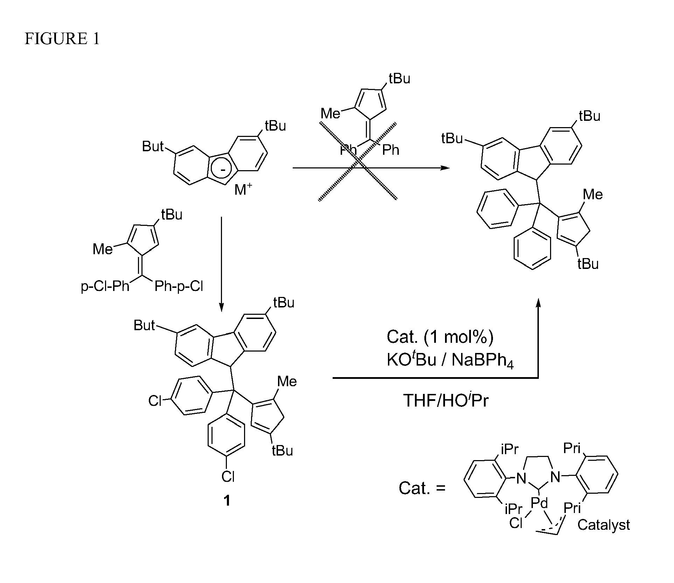

The scheme is represented in Figure 1.

In a Schlenk tube to 2.0 g (3.09 mmol) of ligand precursor 1 dissolved in 50 mL of dry THF were added, 2.3 g (6.72 mmol) of NaBPh₄, 1.5 g (13.37 mmol) of KO*^{t}*Bu, 0.018 g (0.03 mmol) of (SIPr)Pd(C₃H₅)Cl and 10 mL of *ⁱ*PrOH under argon flush. The reaction mixture was stirred at a temperature of 60 °C for a period of time of 3 hours and then filtered through silica. The filtrate was evaporated and the residue was recrystallised from an approximately 1:1 mixture CH₂Cl₂/MeOH 1:1 mixture to give colourless prisms of [2 ·CH₂Cl₂]. The crystals were redissolved in 3 mL of toluene and the resultant solution was evaporated and dried under vacuum for a period of time of 5 to 10 h to yield 0.89 g of 2 with a yield of 50%.
¹H NMR (200 MHz, CD₂Cl₂, 233 K) δ (at least three isomers of the double bonds in Cp were detected): 8.3-6.5 (m, 16H, Flu + Ph), 6.0-5.0 (m, 2H, Cp + 9-H), 3.3-1.8 (m, 2H, Cp), 1.3-1.0 (m, 21 H, *^{t}*Bu + Me), 0.8-0.7 (m, 9H, *^{t}*Bu). MS-FAB (m/z): 577.6, 301.4, 277.4.
Anal. Calcd for C₄₄H₅₀: C, 91.28; H, 8.71. Found: C, 92.12; H, 9.23.

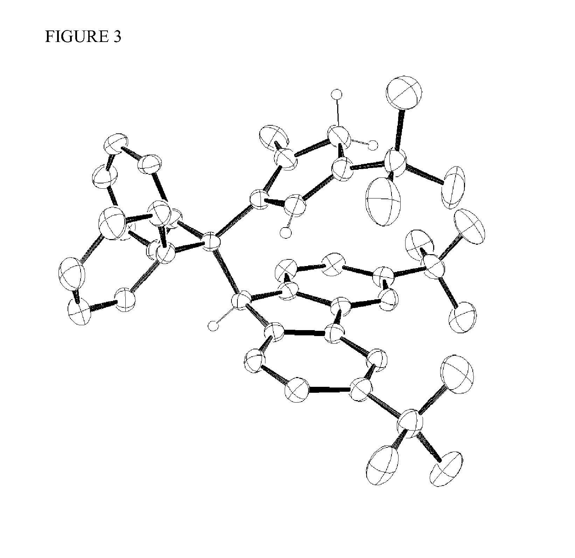

The X-ray crystallography of Ph₂C(3,6-*^{t}*Bu₂Flu)(3-*^{t}*Bu-5-Me-Cp) (2) ·CH₂Cl₂ is presented in Figure 3.

The catalyst components synthetised here-above were tested in the homo- or copolymerisation of propylene. They were activated with methylaluminoxane (MAO) and optionally deposited on a silica support in order to produce highly isotactic homopolymers of propylene or ethylene-propylene rubber (EPR) having excellent impact properties.

## Claims

1. A process for preparing a catalyst component of general formula
R' (R^{b}₂-Flu) (R^{c}R^{d}C₅H₂) MQ₂
werein R' is a diaryl bridge;
wherein R^{b}, R^{c} and R^{d} are each independently selected from H or alkyl having from 1 to 12 carbon atoms or silyl groups substituted or unsubstituted;
wherein M is a metal Group 4 of the Periodic Table; and
wherein Q is halogen or alkyl having from 1 to 12 carbon atoms; and said process comprising:
a) reaction by nucleophilic addition, in a solvent, of the group (R^{a}₂CR^{c}R^{d}fulvene), wherein each R^{a} is independently selected from halogenated aromatic group, with the group [R^{b}₂-Flu]⁻ [M']⁺ wherein M' is alkali metal such as Li, Na, K;
b) hydrolysis and separation of the resulting ligand;
c) elimination of the halogen substituents on the aromatic R^{a} groups by reaction with a reducing system in a solvent and protic source, capable of reducing CX bond but not the C=C bond of the cyclopentadienyl group, in the presence of a palladium-based catalyst such as 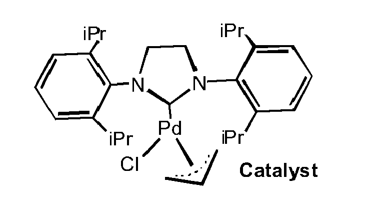 and wherein the amount of reducing system is of at least 2 equivalents, preferably 4 equivalents per equivalent of ligand ;
d) deprotonation of the ligand of step b) with R"M" to prepare a di-anion ligand, wherein R" is an alkyl having from 1 to 6 carbon atoms and M" is Li, Na or K;
e) salt metathesis reaction in a solvent of the di-anion ligand of step d) with MQ₄ wherein M is a metal group 4 of the Periodic Table and Q is halogen or alkyl or benzyl;
f) isolation of the diaryl-bridged catalyst component by crystallisation.

2. The process of claim 1 wherein the halogenated aromatic group of step a) is halogenated phenyl.

3. The process of claim 2 wherein the halogenated phenyl group is a phenyl carrying a chlorine substituent at position 4.

4. The process of any one of claims 1 to 3 wherein both both R^{b} are the same and are tert-butyl at positions 2 and 7 or at positions 3 and 6.

5. The process any of the preceding claims wherein R^{c} is methyl at position 2 and R^{d} is tert-butyl at position 4.

6. The process of any one of the preceding claims wherein the reducing system is KO^{t}Bu/NaBPh₄.

7. The process of any one of the preceding claims wherein the solvent of step a) is Et₂O.

8. The process of any one of the preceding claims wherein the solvent in step e) is also Et₂O.

9. The process of any one of the preceding claims wherein M" is Li.

10. Use of the metallocene catalyst component obtainable by the process of any one of claims 1 to 9 in combination with a suitable activating agent to prepare ethylene-propylene rubber having an ethylene content of from 8 to 15 wt%, a weight average molecular weight of at least 500 kDa and excellent impact properties.

11. Use of the metallocene catalyst component obtainable by the process of any one of claims 1 to 9 in combination with a suitable activating agent to prepare isotactic polypropylene having a weight average molecular weight of more than 500 kDa, a melting temperature of more than 150 °C and an mmmm pentad content of more than 95.
